# EUROPÄISCHE PATENTSCHRIFT

(11) **EP 3 271 559 B1**
(45) Veröffentlichungstag und Bekanntmachung des Hinweises auf die Patenterteilung: **08.05.2019**
(21) Anmeldenummer: 16710951.1
(22) Anmeldetag: 14.03.2016
(51) Int. Cl.: F01N 3/20, F01N 13/16, H05B 6/10

(54) **HEIZBARER FLÜSSIGKEITSBEHÄLTER**
HEATABLE CONTAINER FOR LIQUID
RÉSERVOIR DE LIQUIDE CHAUFFANT

(30) Priorität: 20.03.2015 DE 102015104239
(43) Veröffentlichungstag der Anmeldung: 24.01.2018
(73) Patentinhaber: Elkamet Kunststofftechnik GmbH, 35216 Biedenkopf (DE)
(72) Erfinder: DEUSSEN, Martin, 35039 Marburg (DE); EMRICH, Marco, 35327 Ulrichstein (DE)
(74) Vertreter: Keil & Schaafhausen Patent- und Rechtsanwälte PartGmbB
(86) Internationale Anmeldenummer: PCT/EP2016/055453
(87) Internationale Veröffentlichungsnummer: WO 2016/150744

(56) Entgegenhaltungen:
- WO-A1-2006/108437
- DE-A1-102010 042 985
- DE-U1-202006 001 760
- JP-A- 2001 327 398

## Beschreibung

Die Erfindung betrifft einen heizbaren Harnstofflösungsbehälter aus Kunststoffmaterial, z.B. thermoplastischen Kunststoffen wie Polyethylen (PE), vernetztem Polyethylen (XPE), Polypropylen (PP), Polyamid 6, 11 oder 12 (PA 6, PA 11 oder PA 12) oder dgl., insbesondere zur Aufnahme von Betriebsmitteln, wie Harnstoffen oder Wasser/Harnstoffgemischen, mit einer Behälterwand, die einen Behälterinnenraum definiert, wobei dem Behälter eine elektrisch ansteuerbare Magnetisierungseinheit zum Erzeugen eines magnetischen Wechselfeldes zugeordnet ist.

Um die zunehmend restriktivere Limitierung der Emissionsgrenzwerte für Verbrennungskraftmaschinen insbesondere in Kraftfahrzeugen zu erfüllen, existieren verschiedene Verfahren zur Abgasnachbehandlung. Problematisch ist dabei insbesondere die Nachbehandlung von dieselmotorischen Abgasen, da hier die Motorbetriebsbedingungen mit Lambda deutlich größer eins keine gleichzeitige reduktive und oxidative Nachbehandlung erlauben. Zur Reduktion der im Abgas enthaltenen Stickoxide (NOx) werden daher u. a. Katalysatoren für eine selektive katalytische Reduktion (SCR) der Stickoxide eingesetzt. Als weitere Komponente für die am Katalysator ablaufende Reaktion muss jedoch Ammoniak beigemischt werden.

In der Regel wird der Ammoniak durch das Einspritzen einer 32,5 %igen, wässrigen Harnstofflösung aus einem Vorratstank im Fahrzeug eingebracht. Diese Harnstofflösung wird von der Industrie einheitlich mit AdBlue® oder in den USA als Diesel Exhaust Fluid (DEF) bezeichnet und ist in ihrer Zusammensetzung in der DIN 70070 beschrieben.

Da der Gefrierpunkt dieser Harnstofflösung bei etwa -11 °C liegt, besteht jedoch jahreszeit- und regionsabhängig die Gefahr des Einfrierens der Lösung im Tank des Fahrzeuges.

Aus dem Stand der Technik ist daher bekannt, die Flüssigkeitsbehälter mit einer Heizanordnung auszustatten, die das Einfrieren bzw. die dem vollständigen Gefrieren vorangehende Versulzung des Harnstoffes vermeidet sowie das Auftauen der gefrorenen Harnstofflösung beim Kaltstart ermöglicht. Bekannte Maßnahmen umfassen das nachträgliche Einbringen einer separaten Heizspirale in den ausgeformten Behälter. Nachträglich montierte Heizelemente haben jedoch den Nachteil, dass die Heizleistung und die räumliche Verteilung des Heizelements im Behälterinneren durch die Größe der zur Montage des Heizelements vorgesehenen Öffnung in der Behälterwandung begrenzt sind. Ein Ausgleich fehlender Wärmetauscherfläche durch höhere Vorlauftemperatur ist jedoch nur eingeschränkt möglich, da die Harnstofflösung bei höheren Temperaturen durch thermische Zersetzung unbrauchbar wird. Von daher ist eine lokale Überhitzung zu vermeiden.

Ein anderer Ansatz besteht darin, eine Heizanordnung unmittelbar bei der Fertigung des Behälters in diesen zu integrieren. Aus der GB 2 136 098 A ist ein durch ein Rotationsschmelzverfahren hergestellter heizbarer Tank aus Kunststoff mit einer Heizspirale bekannt. Die Befestigung der Heizspirale innerhalb des Tanks geschieht über Verbinder, die in die Seitenwände des Wassertanks integriert sind. Die im Tank angeordnete Heizspirale tritt an zwei Stellen aus dem Tank heraus, wo sie durch eine Klemmverbindung von den Verbindern gehalten wird. Die Verbinder werden im Fertigungsprozess in die Seitenwand des Tanks eingeschmolzen und besitzen ein zur Außenseite des Tanks hervorstehendes Ende, an dem Leitungen zur Wärmemittelzufuhr bzw. Wärmemittelabfuhr angeschlossen werden können.

Aus der EP 1 640 577 B1 ist ein heizbarer Kunststofftank bekannt, bei dem Heizmitteleinlass und Heizmittelauslass einer Heizwendel, die in den Tank hineinragt, im unteren Tankbereich an der Kunststoff-Tankwand von Kunststoff umsintert sind. Die Heizwendel ist dadurch unbeweglich im Tank fixiert. Aus der DE 20 2006 001 760 U1 ist ein Kunststoffbehälter zur Aufnahme eines Harnstoff-Wasser-Gemisches bekannt, bei dem Rohrleitungen als Heizelement unmittelbar in die Behälterwand integriert bzw. eingebettet und mit dem Kühlsystem eines Motors verbunden sind. Problematisch bei integrierten Systemen sind jedoch die notwendigen Durchführungen in der Behälterwand für die elektrischen oder flüssigkeitsführenden Leitungen für den Betrieb der Heizwendel, da diese die grundsätzliche Gefahr einer Leckage mit sich bringen.

Um auf durch die Behälterwand führende Leitungen zu verzichten, schlägt die DE 10 2010 042 985 A1 eine Tankanordnung mit einer Heizanordnung vor, die ein im Innenraum des Tanks angeordnetes Heizelement in Form eines Metallkörpers aufweist, das zur induktiven Erwärmung eingerichtet ist. Durch die Behälterwand vom Heizelement getrennt ist eine elektrisch ansteuerbare Magnetisierungseinheit benachbart zum Heizelement vorgesehen. Die in dieser Druckschrift vorgeschlagene Lösung basiert auf dem induktiven Erwärmen elektrisch leitfähiger Körper. Die Magnetisierungseinheit produziert ein magnetisches Wechselfeld, welches das Metallelement anregt. Das Magnetfeld erzeugt in dem Metallelement Wirbelströme, die das Metall des Metallelements durch den ohmschen Widerstand aufheizen. Die Wärme entsteht dabei unmittelbar in dem Metallkörper selbst und muss nicht durch Wärmeleitung übertragen werden. Das an der Behälterinnenwand angeordnete Metallelement überträgt die Wärme direkt auf die Flüssigkeit. Generell lässt sich diese Vorgehensweise als induktive Beheizung des Fluids beschreiben. Der Vorteil besteht insbesondere darin, dass auf elektrische Leitungen, die durch die Behälterwand zu dem im Innenraum angeordneten Heizelement führen, verzichtet werden kann.

Nachteilig bei dieser Lösung ist jedoch die notwendige Platzierung des Metallkörpers bei der Fertigung. Dieser muss an der gewünschten Stelle in die Behälterwand eingeschmolzen oder nachträglich fest montiert werden, was grundsätzlich einen zusätzlichen Fertigungsschritt mit sich bringt. Darüber hinaus führt das Eingliedern des Metallelements auch zu Restriktionen bei der Behälterform. Asymmetrische und insbesondere komplexe Behälterformen sind für das Metallelement ungeeignet. Dieses müsste an die Behälterform angepasst werden, was vor dem Hintergrund steigender Package-Anforderungen mit einem erhöhten Aufwand verbunden ist. Darunter leidet die Effizienz bei der Erwärmung des Fluids. Ein weiteres Problem besteht darin, dass die Magnetisierungseinheit unmittelbar in der Nähe des Metallelements angeordnet sein muss, wodurch sich Einschränkungen bei der Dicke der Behälterwand ergeben.

Es ist daher Aufgabe der vorliegenden Erfindung einen gattungsgemäßen Flüssigkeitsbehälter vorzuschlagen, der eine effizientere Erwärmung der im Behälter aufgenommenen Flüssigkeit sowie eine verbesserte Fertigung ermöglicht.

Diese Aufgabe wird durch einen Flüssigkeitsbehälter mit den Merkmalen des Anspruchs 1 gelöst.

Bei einem erfindungsgemäßen Flüssigkeitsbehälter besteht die Behälterwand zumindest teilweise aus induktiv erwärmbarem Kunststoffmaterial, das Zusätze oder Bestandteile aufweist, durch die der Kunststoff induktiv erwärmbar ist. Das Kunststoffmaterial bzw. die darin enthaltenen Zusätze können durch die Magnetisierungseinheit induktiv angeregt werden, so dass ein in dem Behälterinnenraum aufgenommenes Fluid direkt über die Behälterwand beheizt werden kann. Im Gegensatz zu den bekannten Maßnahmen, die im Behälterinnenraum angeordnete oder in die Behälterwand eingesinterte Heizelemente vorsehen, wird die Behälterwand aufgrund ihrer induktiv erwärmbaren Zusätze direkt erwärmt, wodurch auf ein separates Heizelement, das in der Behälterwand aufgenommen oder im Behälterinneren angeordnet ist, verzichtet werden kann. Ein Stutzen, der mit einem Deckel verschlossen werden kann, ist an einem oberen Ende des Behälters angeformt oder befestigt. Über den Stutzen können Befüllungseinrichtungen in den Behälter eingeführt werden.

Durch die Möglichkeit, die Behälterwand direkt zu erwärmen, ergeben sich große Freiheiten hinsichtlich der Formgebung des Betriebsmittelbehälters. Auch der Herstellungsprozess ist dadurch erheblich vereinfacht. Grundsätzlich ist es möglich, nur Abschnitte des Flüssigkeitsbehälters aus induktiv erwärmbarem Kunststoff zu fertigen, so dass der Flüssigkeitsbehälter nur teilweise aus induktiv erwärmbarem Kunststoff besteht. Natürlich kann auch der gesamte Flüssigkeitsbehälter oder zumindest eine Schicht der Behälterwand aus induktiv erwärmbarem Kunststoff bestehen.

Vorzugsweise ist der Flüssigkeitsbehälter ein Betriebsmittelbehälter, insbesondere ein Harnstoff- oder ein Harnstoff-Wasser-Gemisch-Behälter.

Zum Herstellen des Behälters eignet sich insbesondere ein Rotationsformverfahren. Der Flüssigkeitsbehälter lässt sich aber auch durch Blasformen, Tiefziehen, Vakuumformen oder Spritzgießen herstellen Beim Rotationsformverfahren wird ein Ausgangsmaterial in Form eines Kunststoffs oder eines Kunststoffvorläufers in eine Rotationsschmelzform eingebracht und unter Rotation der Rotationsschmelzform ausgeformt.

Üblicherweise werden die Kunststoffbehälter im Rotationsformverfahren mittels eines Rotationswerkzeugs hergestellt. Eine bekannte Form der Herstellung sieht vor, dass eine abgewogene Menge Kunststoffmaterials in Form von Pulver, Pellets, Mikropellets oder dergleichen als Ausgangsmaterial in eine hohle Form gegeben wird, deren Innenoberfläche die Außenfläche des Kunststoffbehälters definiert. Die Form wird dann in Rotation um zwei in der Regel senkrecht zueinander angeordnete Achsen versetzt. Wärme wird in die Rotationsschmelzform eingetragen. Die Drehzahlen der Rotationsschmelzformen sind so niedrig, dass

Fliehkräfte im Vergleich zur Schwerkraft einen geringen Einfluss besitzen. Das Kunststoffmaterial beginnt zu schmelzen und sich an der Innenseite der Rotationsschmelzform anzulegen, wodurch dem Kunststoffbehälter seine spätere Form gegeben wird. Für diese weit verbreitete Variante des Rotationsformverfahrens werden Thermoplaste wie Polyethylen (PE), Polypropylen, (PP), Polyamid 6 (PA6), Polyamid 11 oder 12 (PA11, PA12), Polycarbonat (PC) und dergleichen verwendet. Die Verarbeitungstemperaturen müssen oberhalb der Schmelz- oder Erweichungstemperatur des jeweiligen Kunststoffmaterials liegen.

Einige Kunststoffe, insbesondere Thermoplaste mit sehr hoher Schmelz- oder Erweichungstemperatur, bspw. PA6, oder auch Duroplaste, die einer thermoplastischen Verarbeitung naturgemäß nicht zugänglich sind, werden im Rotationsverfahren in an sich ebenfalls bekannter Weise bevorzugt so verarbeitet, dass als Ausgangsmaterial ein chemischer Vorläufer des für das Formteil vorgesehenen Materials, der sogenannte Kunststoffvorläufer, als Schmelze in flüssiger Form in die Rotationsschmelzform eingebracht wird und dort unter Rotation bei gleichzeitiger Formgebung bzw. Ausformung chemisch zum endgültigen Kunststoffwerkstoff reagiert, insbesondere polymerisiert. Dieses Verfahren kommt z.B. vorteilhaft zur Herstellung von Formteilen aus Polyamid 6 (PA6), Polyamid 12 (PA12) oder ihren Co-Polymeren zum Einsatz, wobei als Kunststoffvorläufer die entsprechenden Lactame, also z.B. Caprolactam und/oder Laurinlactam, eingesetzt werden, die bei Raumtemperatur unter Normalbedingungen in fester Form vorliegen, im Rotationsverfahren jedoch als Schmelze mit sehr niedriger Viskosität (Größenordnung 10 mPa·s, d.h. ungefähr wie Wasser) verarbeitet werden. Diese Verfahrensvariante gestattet die Herstellung von Kunststoffformteilen unter Umgehung der bei thermoplastischer Verarbeitung erforderlichen hohen Temperaturen, und die Prozesstemperatur wird bevorzugt unterhalb der Schmelztemperatur des fertigen Kunststoffs gehalten.

Auch die Polymerisationsreaktionen von Dicyclopentadien (DCPD) zu Poly-Dicyclopentadien (PDCPD, z.B. Telene® der Fa. Rimtec Corp.) oder von cyclischem Butylenterephthalat (z.B. CBT® der Fa. Cyclics) zu Polybutylenterephthalat (PBT) werden im Rotationsverfahren genutzt. Des Weiteren ist es bekannt, Formteile aus Polyurethanen (PU) im Rotationsverfahren durch Reaktion von Di- und/oder Polyisocyanaten mit Di- und/oder Polyolen als Kunststoffvorläufern herzustellen.

Den zuletzt genannten Materialsystemen ist gemeinsam, dass das hergestellte Formteil aus einem Kunststoffmaterial besteht, das erst während der Formgebung, auch Ausformung genannt, im Rotationswerkzeug aus einem Ausgangsmaterial in Form eines Kunststoffvorläufers gebildet wird, der im Rotationswerkzeug zunächst in mehr oder weniger flüssiger Form vorliegt und während des Ausformens chemisch reagiert, insbesondere polymerisiert.

Um das Kunststoffmaterial gezielt mit den gewünschten Eigenschaften zu versehen, ist zumindest eine als Zusatz in das Ausgangsmaterial eingebettete Komponente vorgesehen, die dazu ausgebildet ist, das Kunststoffmaterial induktiv erwärmbar zu machen.

Erfindungsgemäß kann das Kunststoffmaterial der Behälterwand Zusätze oder Bestandteile aufweisen, durch die der Kunststoff induktiv erwärmbar ist. So können induktiv erwärmbare, z.B. elektrisch leitende, Zusätze dem jeweiligen Ausgangsmaterial, sei es in fester Form oder als Schmelze, beigefügt werden. So kann das Kunststoffmaterial elektrisch leitende und/oder magnetische, insbesondere ferromagnetische- oder ferrimagnetische, Partikel aufweisen.

Geeignet sind ferromagnetische Metalle, wie zum Beispiel Eisen (Fe), Kobalt (Co), Nickel (Ni), oder ferromagnetische Legierungen, zum Beispiel aus Eisen, Aluminium, Nickel, Kupfer und Kobalt ("Alnico"), solche aus Samarium, Eisen und Kobalt oder auch Heuslersche Legierungen aus den Metallen Kupfer, Aluminium und Mangan.

Als ferrimagnetische Zusätze eignen sich Ferrite der allgemeinen Formel M^{II}O·Fe₂O₃) wie bspw. Magnetit (M^{II} = Fe, also FeO·Fe₂O₃ = Fe₃O₄), wobei als zweiwertige Metalle M^{II} auch Mangan (Mn), Kobalt (Co), Nickel (Ni), Kupfer (Cu), Zink (Zn), Magnesium (Mg) oder Cadmium (Cd) alleine oder in Mischungen in Frage kommen.

Die induktiv erwärmbaren Zusätze können dem Kunststoff beispielsweise in Form von Spänen, Feilspänen, Pulver, Granulat, sonstigen Partikeln oder Nanopartikeln beigefügt werden. Der magnetische Zusatz kann alternativ oder in Ergänzung zu eingebetteten magnetischen Komponenten vorgesehen werden.

Die eingelagerten Zusätze gestatten die induktive Erwärmung der Behälterwandung, die im Fall ferromagnetischer oder ferrimagnetischer Zusätze auf Ummagnetisierungsverlusten (Hystereseverlusten) beruht. Bei elektrisch leitenden Zusätzen können grundsätzlich auch ohmsche Verluste durch induktiv erzeugte Wirbelströme einen Beitrag leisten. Bei zugleich elektrisch leitenden und magnetischen Zusätzen können beide Effekte zur Erwärmung beitragen. Welcher Mechanismus zur Erwärmung beiträgt, hängt dabei-außer von der elektrischen Leitfähigkeit - sowohl von der Frequenz des magnetischen Wechselfeldes wie auch von der Partikelgröße ab.

Während Hystereseverluste bei vielen technischen Anwendungen möglichst vermieden werden sollten, eignen sich für die vorliegende Erfindung inbesondere Zusätze aus magnetischen Materialien mit möglichst breiter Hysteresekurve, d.h. mit hoher Remanenzmagnetisierung und hoher Koerzitivfeldstärke. Solche Materialien werden auch als "magnetisch hart" oder "hartmagnetisch" bezeichnet.

Eine zuverlässige Temperaturbegrenzung lässt sich erzielen, indem magnetische Zusätze mit einer auf die gewünschte Höchsttemperatur abgestimmten Curie-Temperatur T_{C} ausgewählt werden. Die gewünschte Höchsttemperatur kann dabei entweder im Hinblick auf die Temperaturbeständigkeit des Füllmediums oder auf die Temperaturbeständigkeit des Kunststoffs der Behälterwand festgelegt werden. Geeignete Zusätze sind dem Fachmann bekannt, bspw. aus US 2,393,541 (ferromagnetische Materialien) oder aus US 3,391,846 (ferrimagnetische Materialien; dort allerdings als "anti-ferromagnetisch" bezeichnet).

Die induktiv erwärmbaren Zusätze können mit dem Ausgangsmaterial in die Rotationsschmelzform gegeben werden, wo sie sich mit dem Kunststoffmaterial vermischen. Sie können auch im Vorfeld in das Ausgangsmaterial eincompoundiert werden.

Im Falle festen Ausgangsmaterial können die Zusätze beispielsweise mit den Partikeln des Kunststoffmaterials vermengt oder auf diese aufgetrommelt sein (Trockenmischung, "dry blend") oder getrennt in das Werkzeug gegeben und dort mit dem Kunststoffmaterial vermischt werden. Bevorzugt werden die Zusätze durch Compoundierung innig mit dem Kunststoffmaterial vermischt, so dass die Kunststoffpartikel in ihrem Inneren mit den Zusätzen gefüllt sind, wodurch insbesondere auch ein fester Zusammenhalt zwischen den Kunststoffpartikeln und den Zusätzen sichergestellt wird. In diesem Fall ist es auch ausreichend, wenn nur ein Teil der Kunststoffpartikel Zusätze enthält.

Die induktiv erwärmbaren Eigenschaften können grundsätzlich auch chemisch in das Kunststoffmaterial integriert sein, indem z.B. Substituenten an der Polymerkette oder Monomereinheiten in der Polymerkette vorhanden sind, die eine magnetische Suszeptibilität X > 0, bevorzugt X >> 0 aufweisen. Auch in diesem Fall können Mischungen von magnetischen und nicht-magnetischen Kunststoffmaterialien eingesetzt werden, wobei der Basiswerkstoff, die Einfärbung, die Additivierung sowie andere Eigenschaften des Kunststoffmaterials für magnetische und nicht-magnetische Partikel identisch oder verschieden sein können.

Durch die Zusätze kann die Behälterwand unmittelbar induktiv erwärmt werden und Wärme produzieren. Diese kann dann direkt auf das Fluid übertragen werden.

Um einen Flüssigkeitsbehälter herzustellen, der lediglich einen induktiv erwärmbaren Bereich aufweist, kann ein Magnetelement in der Rotationsschmelzform angebracht werden, bevor das Ausgangsmaterial, das aus einem Anteil mit und einem Anteil ohne magnetische Zusätze besteht, in die Rotationsschmelzform eingebracht wird. Während die Rotationsschmelzform rotiert, zieht das Magnetelement den magnetische Zusätze enthaltenden Teil des Ausgangsmaterials an und hält diesen fest. Durch den Einsatz des Magnetelementes können so scharf konturierte und abgegrenzte Bereiche des induktiv erwärmbaren Kunststoffs gezielt ausgebildet werden, da über das Magnetelement eine Materiallenkung erzielt werden kann. Die induktiv erwärmbaren Bestandteile werden durch das Magnetelement gezielt gelenkt.

Als Magnetisierungseinheit kommt grundsätzlich eine Magnetisierungsspule in Betracht. Nach einer weiteren Ausführungsform der Erfindung ist daher vorgesehen, dass der Behälter eine Magnetisierungsspule aufweist, die der induktiven Anregung des induktiv erwärmbaren Kunststoffes dient. Die Magnetisierungseinheit ist elektrisch ansteuerbar, um ein magnetisches Wechselfeld zu erzeugen.

Eine weitere vorteilhafte Ausführungsform sieht vor, dass die Magnetisierungsspule durch die Strom fließen kann, in die Behälterwand integriert oder an dieser angebracht ist. Zur Herstellung kann eine Rotationsschmelzform beispielsweise mit einer Magnetisierungsspule ausgestattet werden, bevor das Ausgangsmaterial in die Rotationsschmelzform eingebracht wird. Während des Rotationsschmelzprozesses wird die Magnetisierungsspule in die Behälterwand aufgenommen und integral mit dem Behälter verbunden. Die Magnetisierungsspule kann dabei, mit Ausnahme von elektrischen Anschlüssen, vollständig in die Behälterwand aufgenommen sein. Es ist aber auch möglich, dass die Magnetisierungsspule so in die Behälterwand aufgenommen wird, dass sie außenseitig mit der Behälterwand bündig abschließt, von außen aber zugänglich ist. Natürlich ist auch eine nachträgliche Montage der Magnetisierungseinheit an oder in der Nähe der Behälterwand möglich.

Nach einer weiteren Ausführungsform der Erfindung ist vorgesehen, dass mehrere Magnetisierungsspulen auf unterschiedlichen Füllhöhen des Flüssigkeitsbehälters vorgesehen sind. Dadurch ist sichergestellt, dass bei jedem Füllstand des Behälters eine optimale Erwärmung des Fluids sichergestellt ist.

Nach einer weiteren Ausführungsform der Erfindung sind die Magnetisierungseinheiten dazu eingerichtet, zumindest gruppenweise getrennt voneinander geschaltet zu werden. So können bei Bedarf einzelne lokale Bereiche des Behälters induktiv erwärmt werden. Insbesondere in Verbindung mit mehreren Magnetisierungseinheiten auf unterschiedlichen Füllhöhen des Behälters kann die Beheizung beispielsweise in Abhängigkeit vom Füllstand des Behälters gezielt geregelt werden. In diesem Sinne können beispielsweise Gruppen von Magnetisierungseinheiten, die einer gemeinsamen Füllhöhe zugeordnet sind, durch einen Regler aktiviert werden, wenn die in dem Behälter aufgenommene Flüssigkeit bis zu einer Höhe ragt, in der die Magnetisierungseinheiten angeordnet sind. Eine weitere Ausführungsform der Erfindung sieht daher Mittel wie eine Steuer- und/oder Regeleinheit vor, die dazu eingerichtet sind, die Magnetisierungseinheiten in Abhängigkeit von der Füllhöhe des Flüssigkeitsbehälters zu schalten. Zum Erfassen der Füllhöhe können aus dem Stand der Technik bekannte Sensoren dienen.

Eine weitere Ausführungsform der Erfindung sieht vor, dass der Behälter zumindest in einem Bereich, der aus dem induktiv erwärmbaren Kunststoff besteht oder diesen aufweist, zwei- oder mehrschichtig aufgebaut ist. Der induktiv erwärmbare Kunststoff ist vorzugsweise auf einer Behälterinnenseite angeordnet.

Um die optimale Wärmelenkung in dem Behälterinnenraum zu gewährleisten, sieht eine weitere Ausführungsform der Erfindung vor, dass der induktiv erwärmbare Kunststoff zur Behälteraußenseite hin von einer weiteren Kunststoffschicht bedeckt ist, die aus nicht induktiv erwärmbaren Material besteht. Die Magnetisierungseinheit und der Bereich des Behälters, der aus induktiv erwärmbarem Kunststoff besteht, können durch eine weitere Kunststoffschicht voneinander getrennt sein. Diese Kunststoffschicht kann aus nicht oder nur unwesentlich induktiv erwärmbarem Kunststoff bestehen.

Eine nicht erwärmbare Kunststoffschicht lässt sich dadurch herstellen, dass dem Ausgangsmaterial keine induktiv erwärmbaren Zusätze beigefügt sind. Diese zusätzliche Kunststoffschicht bildet vorzugsweise die Außenschicht des Kunststoffbehälters. Dadurch ist sichergestellt, dass lediglich die innere Schicht induktiv erwärmt wird. Hierzu erweist es sich als vorteilhaft, wenn der induktiv erwärmbare Kunststoff eine Behälterinnenschicht bildet, die mit einer in dem Behälter aufgenommene Flüssigkeit direkt in Kontakt treten kann.

Die Magnetisierungseinheiten können grundsätzlich an oder in einer Außenschicht oder in einer Zwischenschicht angeordnet sein.

Nach einer weiteren Ausführungsform der Erfindung ist vorgesehen, dass zwischen einer Schicht aus induktiv erwärmbarem Kunststoff und einer weiteren Kunststoffschicht eine Isolierschicht ausgebildet ist. Wesentliches Merkmal einer derartigen Isolierschicht ist, dass sie eine geringere thermische Leitfähigkeit aufweist als die übrigen oder die angrenzenden Schichten der Formteilwandung. Nach einer weiteren Ausführungsform der Erfindung ist vorgesehen, dass die Isolierschicht aus geschäumtem Material besteht, wodurch eine hohe Isolationswirkung gegeben ist.

Zum Herstellen eines mehrschichtigen Flüssigkeitsbehälters kann im Rotationsschmelzverfahren in einem ersten Schritt die Rotationsschmelzform mit einem ersten Ausgangsmaterial befüllt werden, das einen Kunststoff ausbildet, der z.B. nicht induktiv erwärmbar ist. Anschließend wird die Rotationsschmelzform rotiert und Wärme in die Rotationsschmelzform eingetragen, wodurch eine erste Schicht aus dem ersten Kunststoffwerkstoff entsteht. Anschließend wird die Rotationsschmelzform mit einem weiteren Kunststoffwerkstoff befüllt, dem jedoch Zusätze beigefügt sind, die den Kunststoff induktiv erwärmbar machen. Wie im vorherigen Schritt wird die Rotationsschmelzform in Rotation um die Haupt- und Nebendrehachsen versetzt und Wärme eingetragen. Durch dieses grundsätzliche Verfahren können mehrschichtige Behälter gefertigt werden. Die Magnetisierungseinheit kann beispielsweise bei der Herstellung der ersten Schicht im Vorfeld in der Rotationsschmelzform befestigt werden, wodurch sie in der Außenschicht platziert wird. Alternativ kann die Rotationsschmelzform so gestaltet sein, dass an den für die Aufnahme der Magnetisierungseinheit vorgesehenen Stelle eine Vertiefung, ein Einzug oder ein Durchzug an der Behälterkontur angeformt wird und als Bauraum für die Magnetisierungseinheit dient.

Die Erfindung wird nachfolgend anhand von Ausführungsbeispielen und den Zeichnungen näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine Rotationschmelzform zur Herstellung eines erfindungsgemäßen Flüssigkeitsbehälters,
- Fig. 2: eine Seitenansicht eines erfindungsgemäßen Flüssigkeitsbehälters nach einer Ausführungsform der Erfindung, und
- Fig. 3: eine Schnittansicht eines erfindungsgemäßen Flüssigkeitsbehälters nach einer weiteren Ausführungsform der Erfindung.

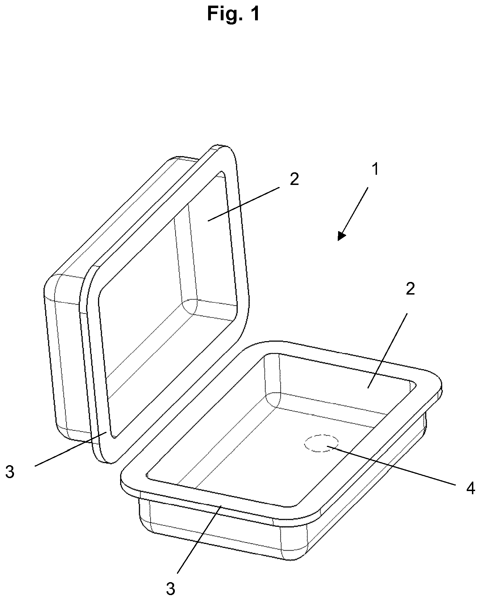

Die Figur 1 zeigt ein Rotationswerkzeug in Form einer Rotationsschmelzform 1 zur Herstellung eines Formteils, insbesondere Behälters, aus Kunststoff durch Rotationsformen, mit Innenwänden 2, deren Kontur die Außenkontur des fertigen Formteils definiert. Das Rotationswerkzeug 1 besteht aus zwei Halbschalen, die entlang ihrer flanschartig ausgebildeten Ränder 3 zusammengesetzt werden und ein hohles Behältnis bilden. Im Bodenbereich der Rotationsschmelzform 1 ist außenseitig ein Magnetelement 4 in Form eines Permanentmagneten angebracht. Im geöffneten Zustand gemäß Figur 1 oder über eine nicht dargestellte Öffnung wird das Rotationswerkzeug mit einem ersten Ausgangsmaterial in Form eines Kunststoffvorläufers oder in Form eines Kunststoffs, der unter Wärmeeinfluss eine Schmelze bildet, gefüllt. Wärme wird in die Rotationsschmelzform 1 mit Hilfe eines nicht dargestellten Ofens eingetragen und die Rotationsschmelzform 1 wird in Rotation um zwei senkrecht zueinander angeordnete Achsen versetzt. Der Kunststoffvorläufer polymerisiert bzw. der Kunststoff schmilzt und beginnt, sich an der Innenseite der Rotationsschmelzform anzulegen, wodurch dem Kunststoffbehälter seine spätere Form gegeben wird.

Das erste Ausgangsmaterial ist nicht magnetisch und kann nicht induktiv erwärmt werden. Es tritt daher nicht mit dem Magnetelement 4 in magnetische Wechselwirkung sondern verteilt sich gleichmäßig in der Rotationsschmelzform.

Nachdem diese erste Kunststoffschicht ausgeformt ist, wird das Rotationswerkzeug mit einem zweiten Ausgangsmaterial in Form eines Kunststoffs, der unter Wärmeeinfluss schmilzt oder sintert, gefüllt. Das zweite Ausgangsmaterial besteht aus einer Mischung eines Kunststoffs mit eincompoundiertem Magnetit-Pulver und eines Kunststoffs ohne einen solchen Zusatz. Die Kunststoffpartikel mit Magnetit-Zusatz werden von dem Magnetelement 4 angezogen und festgehalten. Im Bereich des Magnetelements 4 bildet sich in der zweiten, inneren Schicht dadurch ein induktiv erwärmbarer Abschnitt der Behälterwand aus.

Nach dem Ausformen des Behälters kann eine Magnetisierungseinheit beispielsweise an der Außenseite der Behälterwand angebracht werden, so dass ein durch die Magnetisierungseinheit erzeugtes magnetisches Wechselfeld mit der inneren Kunststoffschicht zusammenwirken und diese induktiv erwärmen kann. Die innere Kunststoffschicht steht in unmittelbarem Kontakt mit der in dem Behälter aufgenommenen Flüssigkeit, wodurch die Wärme optimal in das zu erwärmende Medium geleitet wird. Auf den Magneten 4 kann grundsätzlich verzichtet werden, so dass die innere Schicht des Behälters gleichmäßig induktiv erwärmbare Eigenschaften aufweist.

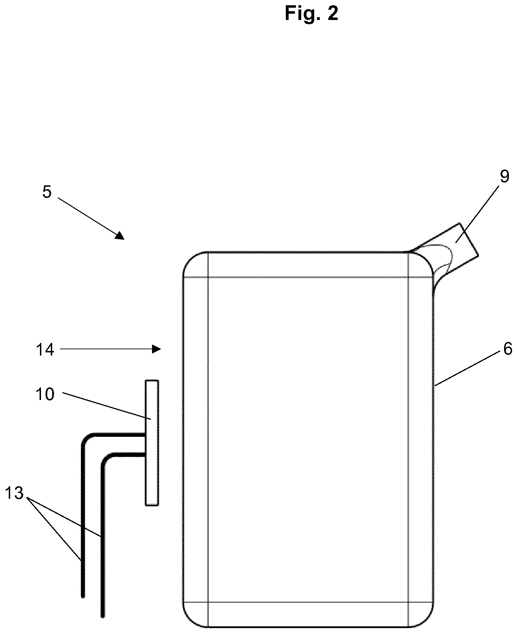

Figur 2 zeigt in einer Seitenansicht einen Flüssigkeitsbehälter 5 nach einer Ausführungsform der Erfindung. Der Flüssigkeitsbehälter 5 weist eine Behälterwand 6 auf, der in einem Seitenbereich 14 eine Magnetisierungseinheit in Form eine Magnetisierungsspule 10 zugeordnet ist. Die Magnetisierungsspule 10 ist über elektrische Anschlüsse 13 mit einem nicht dargestellten Wechselstromgenerator verbunden. Die Behälterwand 6 ist einschichtig und besteht aus einem Kunststoffmaterial, das induktiv erwärmbar ist oder induktiv erwärmbare Zusätze enthält, wie oben in Bezug auf die Figur 1 bereits erläutert. Bei Anregung der Spule 10 mit Wechselstrom bildet sich ein magnetisches Wechselfeld, das eine induktive Erwärmung der Behälterwand 6 im Bereich der Spule 10 bewirkt. Im Behälterinneren aufgenommenes Fluid, das in Kontakt mit der Behälterwand 6 steht, wird dadurch beheizt.

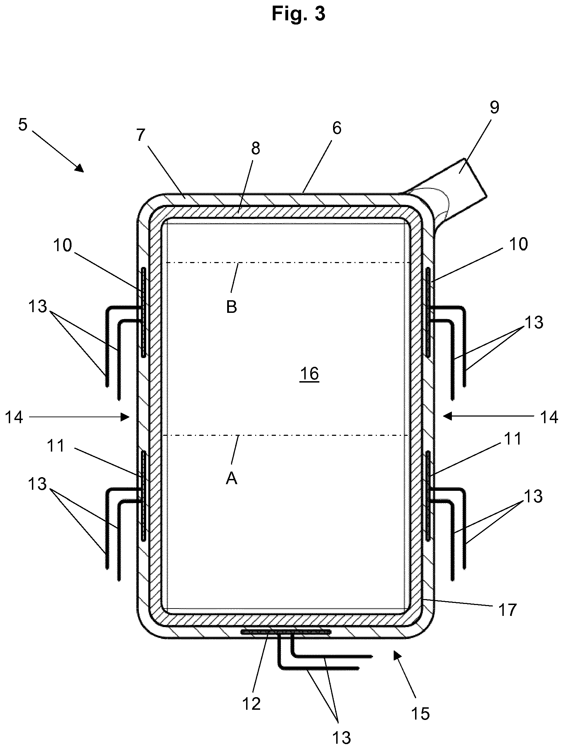

Figur 3 zeigt in einer Schnittansicht einen Flüssigkeitsbehälter 5 nach einer weiteren Ausführungsform der Erfindung. Der Flüssigkeitsbehälter 5 weist eine Behälterwand 6 auf, die aus mehreren Kunststoffschichten besteht. Eine Außenschicht 7 umgibt eine innere Schicht 8. Die innere Schicht 8 bildet die Innenschicht, die in unmittelbarem Kontakt mit in dem Innenraum 16 des Behälters 5 aufgenommener Flüssigkeit steht. Ein Stutzen 9, der mit einem nicht dargestellten Deckel verschlossen werden kann, ist an einem oberen Ende des Behälters 5 angeformt oder befestigt. Über den Stutzen 9 können Befüllungseinrichtungen in den Behälter 5 eingeführt werden. Entnahmevorrichtungen zur Entnahme des Fluids aus dem Behälter 5 sowie andere Vorrichtungen, wie ein Temperatursensor, ein Qualitätssensor, ein Füllstandsensor, eine Ablassschraube oder dergleichen sind in dem Behälter 5 oder an weiteren, nicht dargestellten Anschlussöffnungen in der Behälterwand 6 anordenbar.

Die äußere Schicht 7 besteht aus einem nicht induktiv erwärmbaren Kunststoffmaterial, bzw. es sind dem Ausgangsmaterial, aus dem der Kunststoff hergestellt ist, keine magnetischen oder sonstigen, induktiv erwärmbaren Zusätze beigefügt.

Die innere Kunststoffschicht 8 ist dagegen induktiv erwärmbar. Dem Ausgangsmaterial wurden, wie in Bezug auf die Figur 1 erläutert, Zusätze beigefügt, die dazu führen, dass die Kunststoffschicht 8 induktiv erwärmbar ist. In die äußere Kunststoffschicht 7 sind eine Anzahl von Magnetisierungseinheiten 10, 11 und 12 in Form von Magnetisierungsspulen eingebettet. Die Magnetisierungsspulen sind gruppenweise auf unterschiedlichen Füllhöhen des Flüssigkeitsbehälters angeordnet. Die Magnetisierungsspulen 10 bis 12 sind jeweils über elektrische Anschlüsse 13 einzeln aber auch gruppenweise steuerbar.

In Seitenbereichen 14 des Behälters 5 ist eine erste Gruppe von Magnetisierungseinheiten 10 über einer zweiten Gruppe von Magnetisierungseinheiten 11 angeordnet. In einem Bodenbereich 15 des Behälters 5 befindet sich eine dritte Gruppe von Magnetisierungsspulen 12.

Ist der Behälterinnenraum 16 fast vollständig mit einem Betriebsmittel, bspw. einer wässrigen Harnstofflösung, gefüllt, was durch die Füllhöhe B angedeutet ist, können zur Erwärmung des in dem Flüssigkeitsbehälter 5 aufgenommenen Fluids sämtliche Magnetisierungsspulen 10 bis 12 geschaltet werden. Durch die Magnetisierungsspulen 10 bis 12 wird der Kunststoff der inneren Schicht 8 durch das magnetische Wechselfeld angeregt. Es kommt zu einer induktiven Erwärmung der inneren Kunststoffschicht 8 im Bereich der Magnetisierungseinheiten 10 bis 12. Diese Wärme wird direkt auf das in dem Behälter 5 aufgenommene Fluid übertragen.

Ist der Füllstand des in dem Flüssigkeitsbehälter 5 aufgenommenen Fluids geringer als im ersten beschriebenen Fall, nämlich bspw. auf der Füllhöhe A, wird selektiv nur die Gruppe der unteren seitlichen Magnetisierungseinheiten 11 geschaltet sowie die Magnetisierungseinheit 12 im Bodenbereich 15.

Die selektive Steuerung bzw. Aktivierung der Magnetisierungseinheiten kann über ein nicht dargestelltes Steuergerät, das den Wechselstrom an die Magnetisierungseinheiten leitet, geschaltet werden. Das Steuergerät kann auch mit einem nicht dargestellten Füllstandsensor verbunden sein, der dem Steuergerät Informationen bezüglich der Füllstandshöhe A, B des Fluids in dem Flüssigkeitsbehälter 5 liefert. In Abhängigkeit von der Füllstandshöhe kann das Steuergerät die seitlichen Magnetisierungseinheiten 10 bis 12 selektiv zu- oder abschalten. So lässt sich eine gezielte Regelung der Beheizung wirksam realisieren.

Zwischen der inneren Schicht 8 und der äußeren Schicht 7 kann ferner eine Isolierschicht 17 vorgesehen werden, die eine geringere thermische Leitfähigkeit als die innere Schicht 8 oder die äußere Schicht 7 aufweist. Dadurch ist sichergestellt, dass die thermische Energie nicht nach außen entweicht, sondern effektiv für die Erwärmung des Fluids in dem Flüssigkeitsbehälter 5 genutzt wird. Die Isolierschicht 17 kann in einem Zwischenschritt zwischen der Herstellung der äußeren Schicht 7 und der inneren Schicht 8 ausgeformt werden.

### Bezugszeichenliste

- 1: Rotationswerkzeug (Rotationsform)
- 2: Innenwand Rotationswerkzeug
- 3: Rand
- 4: Magnetelement
- 5: Flüssigkeitsbehälter
- 6: Behälterwand
- 7: äußere Kunststoffschicht
- 8: innere Kunststoffschicht
- 9: Stutzen
- 10: Magnetisierungseinheit (Magnetisierungsspule)
- 11: Magnetisierungseinheit (Magnetisierungsspule)
- 12: Magnetisierungseinheit (Magnetisierungsspule)
- 13: elektrischer Anschluss
- 14: Seitenbereich
- 15: Bodenbereich
- 16: Behälterinnenraum
- 17: Isolierschicht
- A, B: Füllstandshöhe

## Patentansprüche

1. Heizbarer Harnstofflösungsbehälter (5) aus Kunststoffmaterial, insbesondere zur Nachbehandlung von dieselmotorischen Abgasen, mit einer Behälterwand (6), die einen Behälterinnenraum (16) definiert, wobei dem Behälter (5) eine elektrisch ansteuerbare Magnetisierungseinheit (10, 11, 12) zum Erzeugen eines magnetischen Wechselfeldes zugeordnet ist, wobei ein Stutzen (9), der mit einem Deckel verschlossen werden kann, an einem oberen Ende des Behälters (5) angeformt oder befestigt ist, **dadurch gekennzeichnet, dass** die Behälterwand (6) zumindest teilweise aus Kunststoffmaterial mit induktiv erwärmbaren Zusätzen besteht, die durch die Magnetisierungseinheit (10, 11, 12) induktiv angeregt werden können, so dass ein in dem Behälterinnenraum (16) aufgenommenes Fluid über die Behälterwand (6) beheizt werden kann.

2. Harnstofflösungsbehälter nach Anspruch 1, **dadurch gekennzeichnet, dass** der Behälter (5) wenigstens eine Magnetisierungseinheit in Form einer Magnetisierungsspule (10, 11, 12) aufweist.

3. Harnstofflösungsbehälter nach einem der vorhergehenden Ansprüche, **dadurch gekennzeichnet, dass** die Magnetisierungseinheit (10, 11, 12) in die Behälterwand (6) integriert oder an dieser angebracht ist.

4. Harnstofflösungsbehälter nach einem der vorhergehenden Ansprüche, **dadurch gekennzeichnet, dass** mehrere Magnetisierungseinheiten (10, 11, 12) auf unterschiedlichen Füllhöhen (A, B) des Behälter (5) vorgesehen sind.

5. Harnstofflösungsbehälter nach einem der vorhergehenden Ansprüche, der mehrere Magnetisierungseinheiten (10, 11, 12) aufweist, **dadurch gekennzeichnet, dass** die Magnetisierungseinheiten (10, 11, 12) dazu eingerichtet sind, zumindest gruppenweise getrennt voneinander geschaltet zu werden.

6. Harnstofflösungsbehälter nach einem der vorhergehenden Ansprüche, **dadurch gekennzeichnet, dass** der induktiv erwärmbare Kunststoff eine Behälterinnenschicht (8) bildet, die dazu eingerichtet ist, mit einer in dem Behälter (5) aufgenommen Flüssigkeit in Kontakt zu treten.

7. Harnstofflösungsbehälter nach einem der vorhergehenden Ansprüche, **dadurch gekennzeichnet, dass** der Behälter (5) zumindest in einem den induktiv erwärmbarem Kunststoff aufweisenden Bereich zwei- oder mehrschichtig aufgebaut ist, wobei der induktiv erwärmbare Kunststoff auf einer Behälterinnenseite angeordnet ist.

8. Harnstofflösungsbehälter nach Anspruch 7, **dadurch gekennzeichnet, dass** der induktiv erwärmbare Kunststoff (8) zur Behälteraußenseite hin von einer weiteren Kunststoffschicht (7) bedeckt ist, die aus nicht induktiv erwärmbarem Material besteht.

9. Harnstofflösungsbehälter nach einem der Ansprüche 7 oder 8, **dadurch gekennzeichnet, dass** zwischen einer Schicht (8) aus induktiv erwärmbarem Kunststoff und einer weiteren Kunststoffschicht (7) eine Isolierschicht (17) vorgesehen ist, die eine geringere thermische Leitfähigkeit als die übrigen Schichten (7, 8) der Behälterwand (6) aufweist.

10. Harnstofflösungsbehälter nach Anspruch 9, **dadurch gekennzeichnet, dass** die Isolierschicht (17) aus geschäumtem Material besteht.

11. Harnstofflösungsbehälter nach einem der vorhergehenden Ansprüche, **dadurch gekennzeichnet, dass** der Behälter (5) mittels eines Rotationsschmelzverfahrens hergestellt ist.

## Claims

1. A heatable urea solution container (5) made of plastic material, especially for purposes of after-treatment of diesel engine exhaust gases, said container having a wall (6) that defines an interior (16) of the container, whereby an electrically actuatable magnetization unit (10, 11, 12) that serves to generate a magnetic alternating field is associated with the container (5), whereby a connection piece (9) that can be closed with a cap is shaped onto or attached to an upper end of the container (5), **characterized in that** the container wall (6) consists at least partially of a plastic material containing inductively heatable additives that can be inductively excited by the magnetization unit (10, 11, 12) so that a fluid held in the interior (16) of the container can be heated via the container wall (6).

2. The urea solution container according to claim 1, **characterized in that** the container (5) has at least one magnetization unit (5) in the form of a magnetizing coil (10, 11, 12).

3. The urea solution container according to one of the preceding claims, **characterized in that** the magnetization unit (10, 11, 12) is integrated into the container wall (6) or else attached to it.

4. The urea solution container according to one of the preceding claims, **characterized in that** several magnetization units (10, 11, 12) are arranged at different filling levels (A, B) of the container (5).

5. The urea solution container according to one of the preceding claims, having several magnetization units (10, 11, 12), **characterized in that** the magnetization units (10, 11, 12) are configured so that they can be activated separately from each other, at least in groups.

6. The urea solution container according to one of the preceding claims, **characterized in that** the inductively heatable plastic forms an inner layer (8) of the container that is configured to come into direct contact with liquid held in the container (5).

7. The urea solution container according to one of the preceding claims, **characterized in that** the container (5) is composed of two or more layers, at least in one area that has the inductively heatable plastic, whereby the inductively heatable plastic is arranged on the inside of the container.

8. The urea solution container according to claim 7, **characterized in that** the inductively heatable plastic (8) is covered towards the outside of the container with another plastic layer (7) made of material that is not inductively heatable.

9. The urea solution container according to one of claims 7 or 8, **characterized in that** an insulation layer (17) is formed between a layer (8) consisting of inductively heatable plastic and another plastic layer (7), said insulation layer (17) having a lower thermal conductivity than the other layers (7, 8) of the container wall (6).

10. The urea solution container according to claim 9, **characterized in that** the insulation layer (17) is made of foamed material.

11. The urea solution container according to one of the preceding claims, **characterized in that** the container (5) is produced by means of a rotational molding process.

## Revendications

1. Réservoir de solution d'urée (5) pouvant être chauffé, en matériau plastique, en particulier pour le post-traitement de gaz d'échappement de moteurs diesel, comprenant une paroi (6) de réservoir qui définit un intérieur (16) de réservoir, dans lequel une unité de magnétisation (10, 11, 12) pouvant être commandée électriquement est attribuée au réservoir (5) pour produire un champ magnétique alternatif, dans lequel une tubulure (9) qui peut être fermée avec un couvercle, est formée ou fixée à une extrémité supérieure du réservoir (5), **caractérisé en ce que** la paroi (6) de réservoir est composée au moins partiellement de matériau plastique avec des additifs pouvant être chauffés par induction, qui peuvent être excités par induction par l'unité de magnétisation (10, 11, 12) de sorte qu'un fluide reçu dans l'intérieur (16) de réservoir peut être chauffé par la paroi (6) de réservoir.

2. Réservoir de solution d'urée selon la revendication 1, **caractérisé en ce que** le réservoir (5) présente au moins une unité de magnétisation sous forme d'une bobine de magnétisation (10, 11, 12).

3. Réservoir de solution d'urée selon l'une des revendications précédentes, **caractérisé en ce que** l'unité de magnétisation (10, 11, 12) est intégrée dans la paroi (6) de réservoir ou placée contre celle-ci.

4. Réservoir de solution d'urée selon l'une des revendications précédentes, **caractérisé en ce que** plusieurs unités de magnétisation (10, 11, 12) sont prévues à différentes hauteurs de remplissage (A, B) du réservoir (5).

5. Réservoir de solution d'urée selon l'une des revendications précédentes, qui présente plusieurs unités de magnétisation (10, 11, 12), **caractérisé en ce que** les unités de magnétisation (10, 11, 12) sont agencées pour être branchées au moins séparément l'une de l'autre par groupes.

6. Réservoir de solution d'urée selon l'une des revendications précédentes, **caractérisé en ce que** le plastique pouvant être chauffé par induction forme une couche intérieure (8) de réservoir qui est agencée pour venir en contact avec un liquide reçu dans le réservoir (5).

7. Réservoir de solution d'urée selon l'une des revendications précédentes, **caractérisé en ce que** le réservoir (5) est constitué de deux ou plusieurs couches au moins dans une partie présentant le plastique pouvant être chauffé par induction, dans lequel le plastique pouvant être chauffé par induction est disposé sur un côté intérieur de réservoir.

8. Réservoir de solution d'urée selon la revendication 7, **caractérisé en ce que** le plastique pouvant être chauffé par induction (8) est recouvert par une couche de plastique (7) supplémentaire en direction du côté extérieur du réservoir, qui n'est pas en matériau pouvant être chauffé par induction.

9. Réservoir de solution d'urée selon la revendication 7 ou 8, **caractérisé en ce qu'**une couche isolante (17) est prévue entre une couche (8) de plastique pouvant être chauffé par induction et une couche de plastique supplémentaire (7), qui présente une conductibilité thermique inférieure aux couches (7, 8) restantes de la paroi (6) de réservoir.

10. Réservoir de solution d'urée selon la revendication 9, **caractérisé en ce que** la couche isolante (17) est en matériau moussé.

11. Réservoir de solution d'urée selon l'une des revendications précédentes, **caractérisé en ce que** le réservoir (5) est fabriqué par un procédé de fusion par rotation.
